# EUROPÄISCHE PATENTSCHRIFT

(11) **EP 2 321 398 B1**
(45) Veröffentlichungstag und Bekanntmachung des Hinweises auf die Patenterteilung: **24.09.2014**
(21) Anmeldenummer: 09771997.5
(22) Anmeldetag: 24.06.2009
(51) Int. Cl.: C12C 7/06

(54) **MAISCHGEFÄSS FÜR DIE BIERHERSTELLUNG UND RÜHRER FÜR EIN MAISCHGEFÄSS**
MASH TUN FOR PRODUCING BEER AND STIRRER FOR A MASH TUN
CUVE À MAISCHE POUR LA FABRICATION DE BIÈRE ET MALAXEUR POUR CUVE À MAISCHE

(30) Priorität: 01.07.2008 DE 102008030720
(43) Veröffentlichungstag der Anmeldung: 18.05.2011
(73) Patentinhaber: GEA BREWERY SYSTEMS GMBH, 97318 Kitzingen (DE)
(72) Erfinder: BINKERT, Jörg, 96149 Breitengüssbach (DE); HOFMANN, Alexander, 08209 Auerbach (DE); MICHEL, Rudolf, 96049 Bamberg (DE)
(74) Vertreter: von den Steinen, Axel
(86) Internationale Anmeldenummer: PCT/DE2009/000867
(87) Internationale Veröffentlichungsnummer: WO 2010/000227

(56) Entgegenhaltungen:
- EP-A2- 0 774 508
- DE-A1- 1 642 758
- DE-A1- 10 123 812
- DE-C1- 3 132 205
- DE-U1-202005 018 302
- GB-A- 2 071 693

## Beschreibung

Die Erfindung betrifft ein Maischgefäß für die Bierherstellung mit zumindest einem Rührer nach dem Oberbegriff des Anspruchs 1. Weiter betrifft die Erfindung einen Rührer, der zur Herstellung erfindungsgemäßer Maischgefäße eingesetzt werden kann.

Bei den bekannten Maischverfahren werden beheizte Maischgefäße, etwa ein Maischbottich oder eine Maischbottichpfanne, zur Aufnahme, Temperierung und Durchmischung der Maische verwendet. Die bekannten Maischgefäß weisen im Bodenbereich einen Rührer auf, der dazu dient, eine gleichmäßige Temperaturverteilung in der über dem Boden des Maischgefäßes beheizten Maische zu erzielen. Darüber hinaus dient das Durchmischen der Maische mit dem Rührer dazu, eine möglichst große Homogenität der Maische zu erreichen.

Die üblichen Rührer für Maischgefäße werden aus Blechplatten hergestellt, die ebene oder gekehlte Anströmflächen aufweisen und sich geradlinig radial nach außen erstrecken. Diese heute bekannten Rührerformen sind aus den Balkenrührwerken mit sehr niedriger Ansträmfläche entstanden. Die üblicherweise eingesetzten Rührer in Maischgefäßen achse bogenförmig geformt und weist eine Krümmung auf. An diesen ersten Abschnitt schließt sich dann ein zweiter Abschnitt an, der sich bogenförmig radial nach außen erstreckt.

Um die Rührblätter des erfindungsgemäßen Rührers kostengünstig herstellen, werden Blechabschnitte durch Biegeverformung soweit gekrümmt, bis sie die gewünschte bogenförmige Gestalt aufweisen. Dabei ist es erfindungsgemäß vorgesehen, dass mehrere Blechabschnitte separat biegeverformt und anschließend an Schnittstellen miteinander verbunden, insbesondere miteinander verschweißt, werden.

Zur Verbesserung der Strömungseigenschaften ist erfindungsgemäß am freien Ende des Rührblatts ein Strömungsleitelement angeordnet. Mit diesem Strömungsleitelement kann die Maischeströmung umgelenkt werden, wobei die Maischeströmung am Strömungsleitelement möglichst nach oben gerichtet sein sollte. Außerdem ist erfindungsgemäß zur Verbesserung der Strömungseigenschaften am Rührblatt zumindest eine Aussparung und/oder zumindest eine Ausnehmung vorgesehen, in denen die Maische das Rührblatt durchströmen kann. Damit kann gezielt Einfluss auf die Maischeströmung im Bereich des Rührblatts genommen werden.

Welche Art von Krümmung die Rührblätter des Rührers aufweisen, ist grundsätzlich beliebig. Besonders vorteilhaft ist es, wenn die Rührblätter eine Krümmung aufweisen, so dass die Vorderseite des Rührblatts in Rotationsrichtung zumindest abschnittsweise gekrümmt ist. Durch diese konvexe Krümmung an der Vorderseite des Rührblatts wird eine weitgehend laminare Strömung entlang dem Rührblatt nach radial außen ermöglicht. Beim hier beschriebenen Rührertyp handelt es sich somit im Gegensatz zu den bereits eingesetzten Rührern um einen Radialrührer. sind axial fördernde Rührer, die eine schlechte Homogenität in Bezug auf die Temperaturverteilung liefern. Durch diese sehr kantige Gestaltung der bekannten Rührer treten in der Maische beim Kontakt mit den Rührflügeln erhebliche Scherbelastungen auf, die unerwünscht sind.

Ein Maischgefäß mit einem Rührer ist beispielsweise aus der DE 195 05 808 Cl bekannt.

Die DE 20 2005 018 302 U1 beschreibt verschiedene Rührwerke für Maischgefäße. Die Rührflügel der Rührwerke sind dabei bogenförmig ausgebildet und erstrecken sich radial nach außen.

Ausgehend von diesem Stand der Technik ist es Aufgabe der vorliegenden Erfindung, ein neues Maischgefäß für die Bierherstellung mit einem Rührer vorzuschlagen, mit dem die Maischequalität verbessert werden kann. Weiter ist es Aufgabe der Erfindung, einen Rührer zur Herstellung solcher Maischgefäße vorzuschlagen.

Diese Aufgabe wird durch ein Maischgefäß bzw. durch einen Rührer nach der Lehre der beiden unabhängigen Hauptansprüche gelöst.

Vorteilhafte Ausführungsformen der Erfindung sind Gegenstand der Unteransprüche.

Die Rührblätter des Rührers, die vorwiegend senkrecht stehend eingesetzt werden, erstrecken sich gattungsgemäß nicht mehr geradlinig radial nach außen, sondern weisen eine bogenartige Gestaltung auf und erstrecken sich bogenförmig radial nach außen. Durch die Bogenform der Rührblätter wird gewährleistet, dass die an den Rührblättern verdrängte Maische in einer weitgehend laminaren Strömung am Rührblatt entlang strömt und die auftretenden Scherbelastungen dadurch reduziert werden.

Erfindungsgemäß ist vorgesehen, dass das Rührblatt zwei Abschnitte aufweist. Der erste Abschnitt des Rührblatts, der sich von der Mittelnabe des Rührers radial nach außen erstreckt, ist dabei entlang seiner Längs-Gemäß einer weiterhin bevorzugten Ausführungsform ist die Vorderseite des Rührblatts in Rotationsrichtung zumindest abschnittsweise evolventenförmig gekrümmt. Im Ergebnis kann damit die am Rührblatt entlang gleitende Maischemasse unter Minimierung der Scherbelastung auf dem Rührblatt abwälzen.

Die Anzahl der Rührblätter am Rührer kann auf die verschiedensten Anforderungsprofile angepasst werden. Für die meisten Anwendungen ist ein Rührer mit mehreren, insbesondere drei, Rührblättern vorteilhaft.

Um die für den Antrieb des Rührers erforderlichen Drehmomente übertragen zu können, kann am Rührer eine Mittelnabe vorgesehen sein. An dieser Mittelnabe kann dann die Antriebswelle für das Rührwerk in Eingriff gebracht werden. Die Rührblätter selbst werden am Außenumfang der Mittelnabe befestigt, wozu diese entweder angeflanscht oder angeschweißt werden können.

Für die Gestaltung der Mittelnabe gibt es zwei unterschiedliche bevorzugte Gestaltungsformen. Gemäß der ersten bevorzugten Gestaltungsform weist die Mittelnabe einen kreisförmigen Außenumfang auf.

Alternativ zu dem kreisförmigen Außenumfang an der Mittelnabe kann auch ein prismatischer, insbesondere dreieckiger, Außenumfang gewählt werden, wobei die Anzahl der Seiten des prismatischen Außenumfangs auf die Anzahl der Rührblätter abgestimmt werden sollte.

Gemäß einer bevorzugten Dimensionierung des Rührblatts mit einem geradlinigen und einem bogenförmig geformten Abschnitt ist vorgesehen, dass der erste, gradlinige Abschnitt 1/3 des Durchmessers des Rührers bildet und der zweite, bogenförmige Abschnitt 2/3 des Durchmessers des Rührers:

In Ergänzung der erfindungsgemäßen Gestaltung des Rührblatts kann außerdem vorgesehen sein, dass die Unterkante des Rührblatts der Kontur des Bodens des Maischgefäßes folgend nach oben verläuft. Dies bedeutet mit anderen Worten, dass der Abstand zwischen der Unterkante des Rührblatts und dem Boden des Maischgefäßes entlang der gesamten Länge des Rührblatts immer gleich groß ist.

Bevorzugt kann sich die Unterkante des Rührblatts in Richtung des freien Endes nicht nur bogenförmig radial nach außen, sondern auch bogenförmig nach oben erstrecken. Die Unterkante des Rührblatts verläuft also bei dieser Ausführungsform doppelt bogenförmig.

Die Oberkante des Rührblatts sollte sich möglichst parallel zur Unterkante des Rührblatts erstrecken, damit das Rührblatt selber entlang seiner gesamten Längsachse überall die gleiche Breite aufweist.

Gemäß einer bevorzugten Ausführungsform des Rührblatts mit Aussparung ist vorgesehen, dass zumindest eine Aussparung an der Unterkante des Rührblatts angeordnet ist. Hinter der Aussparung ist dabei ergänzend ein zusätzliches Strömungsleitelement angeordnet, mit dem die Maischeströmung insbesondere nach radial außen umgelenkt werden kann.

Alternativ bzw. additiv zu dieser Ausführungsform des Rührblatts mit einer Aussparung an der Unterkante kann außerdem auch noch zwischen der Unterkante und der Oberkante des Rührblatts zumindest eine Ausnehmung vorgesehen sein. Auch hinter dieser Ausnehmung sollte dabei ein Strömungsleitelement angeordnet werden, mit dem die Maischeströmung insbesondere nach unten umgelenkt werden kann.

Für die Gestaltung der Strömungsleitelemente hinter den Ausnehmungen des Rührblatts gibt es verschiedenste Möglichkeiten. Besonders bevorzugt ist es, wenn die hinter den Ausnehmungen angeordneten Strömungsleitelemente einen geschlossenen, insbesondere kreisförmigen, Strömungsquerschnitt aufweisen, wobei sich der Strömungsquerschnitt in Strömungsrichtung verengt. Im Ergebnis bilden die sich verengenden Strömungsleitelemente dann düsenförmige Strömungskanäle, in denen sich die Strömungsgeschwindigkeit erhöht.

Zur Verbesserung der Homogenisierung der Maische ist es besonders vorteilhaft, wenn am Innenumfang des Maischgefäßes zumindest ein feststehender Strömungsbrecher angeordnet ist. An diesem Strömungsbrecher kann die nach außen strömende Maische um- und/oder abgelenkt werden und dadurch eine schonende Homogenisierung der Maische erreicht werden.

Um den Eintrag von Sauerstoff in die Maische an den Strömungsbrechern zu vermeiden, wenn das Maischgefäß nicht vollständig mit Maische gefüllt ist, können mehrere Strömungsbrecher in Vertikalrichtung übereinander angeordnet sein, wobei zwischen den jeweils benachbarten Strömungsbrechern jeweils zumindest ein geringfügiger Vertikalabstand vorhanden ist. Die Füllung des Maischgefäßes mit Maische sollte dann jeweils so erfolgen, dass die Maischoberfläche gerade entlang der Lücke zwischen zwei Strömungsbrechern liegt.

Im Normalfall rotieren die Rührer im Maischgefäß um eine zentrische Antriebsachse. Zur Erreichung einer weiteren erbesserten Durchmischung ist es vorteilhaft, wenn der Rührer um eine exzentrisch gegenüber der Mittelachse des Maischgefäßes verlaufende Rotationsachse rotiert. Diese Exzentrität des Rührers erhöht die Temperaturhomogenität.

Um eine möglichst homogene Erwärmung der Maische zu erreichen, ist es außerdem besonders vorteilhaft, wenn auch die Strömungsbrecher beheizbar sind. Der erfindungsgemäße Rührer zur Herstellung der erfindungsgemäßen Maischgefäße weist seinerseits wiederum Rührblätter auf, die sich ihrer Längsachse nach zumindest abschnittsweise bogenförmig radial nach außen erstrecken.

Verschiedene Ausführungsformen sind in den Zeichnungen schematisch dargestellt und werden nachfolgend erläutert.

Es zeigen:
- Fig. 1: eine erste, nicht erfindungsgemäße Ausführungsform eines Rührers für ein Maischgefäß in perspektivischer Ansicht;
- Fig. 2: den Rührer gemäß Fig. 1 in Ansicht von oben;
- Fig. 3: den Rührer gemäß Fig. 1 in seitlicher Ansicht;
- Fig. 4: die Mittelnabe des Rührers gemäß Fig. 1 in Ansicht von oben;
- Fig. 5: eine zweite, nicht erfindungsgemäße Ausführungsform eines Rührers für ein Maischgefäß in perspektivischer Ansicht;
- Fig. 6: den Rührer gemäß Fig. 5 in Ansicht von oben;
- Fig. 7: den Rührer gemäß Fig. 5 in seitlicher Ansicht;
- Fig. 8: die Mittelnabe des Rührers gemäß Fig. 5 in Ansicht von oben;
- Fig. 9: den Rührer gemäß Fig. 5 bei Anordnung in einem Maischgefäß mit Strömungsbrechern in perspektivischer Ansicht;
- Fig. 10: eine dritte, erfindungsgemäße Ausführungsform eines Rührers mit Aussparungen und Ausnehmungen im Rührblatt in perspektivischer Ansicht;
- Fig. 11: eine vierte, nicht erfindungsgemäße Ausführungsform eines Rührers mit Ausnehmungen im Rührblatt und dahinter angeordneten, düsenförmigen Strömungsleitelementen in perspektivischer Ansicht;
- Fig. 12: ein Rührblatt des Rührers gemäß Fig. 11 1 im Querschnitt entlang der Schnittlinie 1-1.

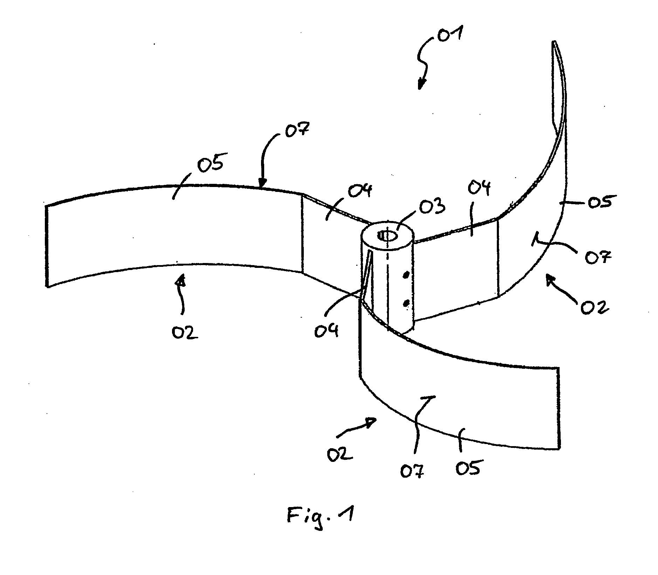

Fig. 1 zeigt in perspektivischer Ansicht einen Rührer 01, der zur Verwendung in einem Maischgefäß für die Bierherstellung vorgesehen ist.

Der Rührer 01 weist drei Rührblätter 02 auf, die zur Durchmischung der Maische im Maischgefäß vorgesehen sind. Die Rührblätter 02 sind endseitig an einer Mittelnabe 03 angeschweißt oder angeflanscht. Die am Außenumfang kreisförmige Mittelnabe 03 kann an ihrem Innenumfang an einer Antriebswelle in Eingriff gebracht werden, um das für den Antrieb des Rührers 01 notwendige Drehmoment zu übertragen.

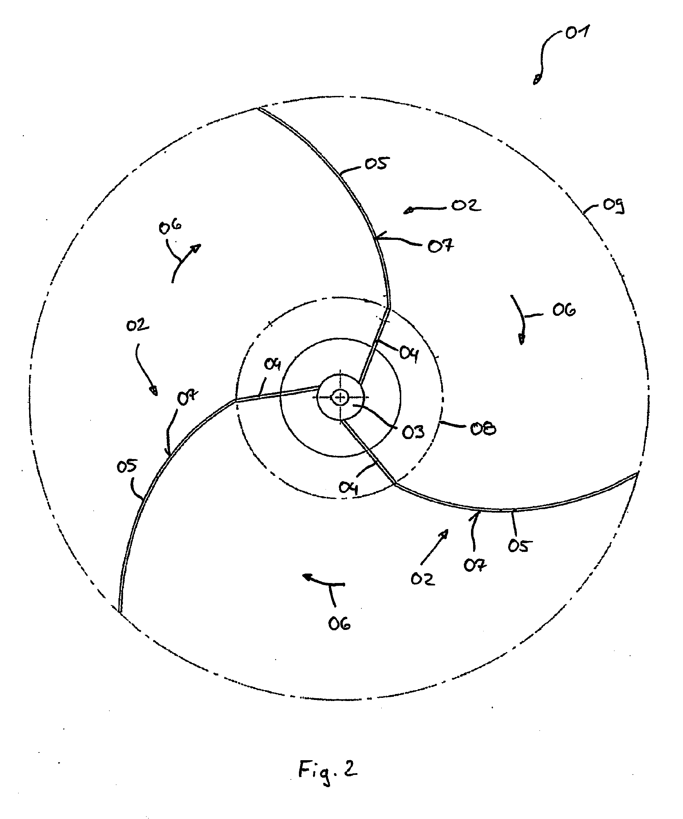

Fig. 2 zeigt den Rührer 01 mit den drei Rührblättern 02 in Ansicht von oben. Die Rührblätter 02 umfassen jeweils zwei Abschnitte 04 und 05. Der erste, sich an die Mittelnabe 03 anschließende Abschnitt 04 ist dabei geradlinig geformt und aus einem ebenen Blechabschnitt hergestellt. An diesen ersten Abschnitt 04 schließt sich ein bogenförmig gekrümmter Abschnitt 05 an. Die in Rotationsrichtung 06 weisende Vorderseite 07 der Rührblätter 02 ist also im Bereich der Abschnitte 05 konvex gekrümmt, um eine möglichst laminare Maischeströmung entlang der Rührblätter 02 radial nach außen zu ermöglichen. Der Durchmesser des Umfangskreises 08, der durch die äußeren Enden der ersten Abschnitte 04 definiert wird, entspricht gerade 1/3 des Gesamtumfangskreises 09 des Rührers 01.

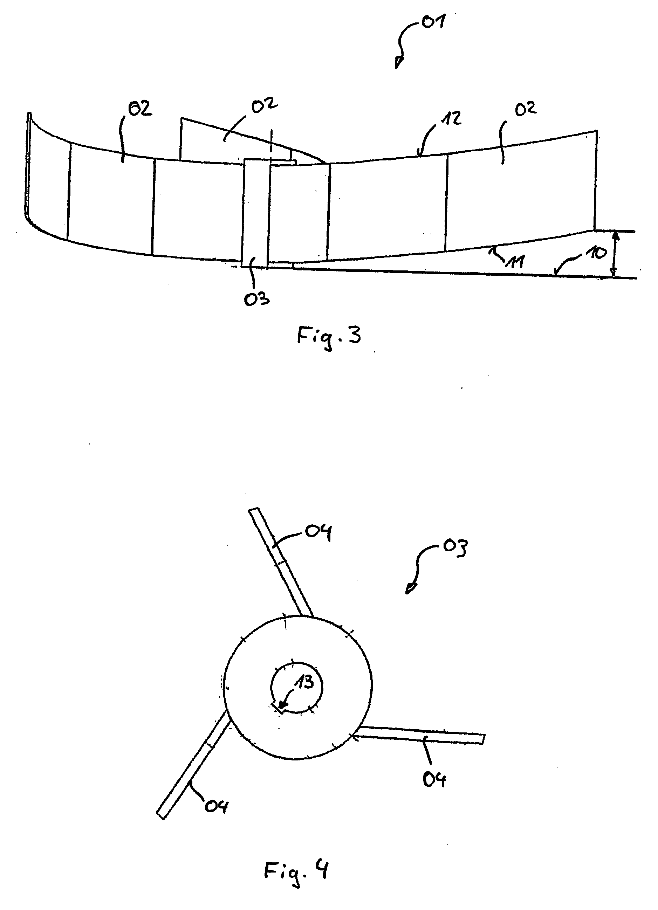

Fig. 3 zeigt den Rührer 01 mit den Rührblättern 02 in seitlicher Ansicht. In dieser Seitenansicht ist erkennbar, dass sich die Unterkanten 11 der Rührblätter 02 in Richtung des freien Endes der Rührblätter 02 gegenüber einem Bezugsniveau 10 bogenförmig nach oben erstrecken und dadurch jeweils im gleichen Abstand zum im Querschnitt bogenförmig konturierten Boden eines nicht dargestellten Maischgefäßes verlaufen können. Die Oberkante 12 der drei Rührblätter 02 verläuft dabei jeweils parallel zur Unterkante 11.

Fig. 4 zeigt die Mittelnabe 03 des Rührers 01 mit den daran befestigten ersten Abschnitten 04, die sich geradlinig nach außen erstrecken. Zur Drehmomentübertragung ist am Innenumfang der Mittelnabe 03 eine Nut 13 vorgesehen.

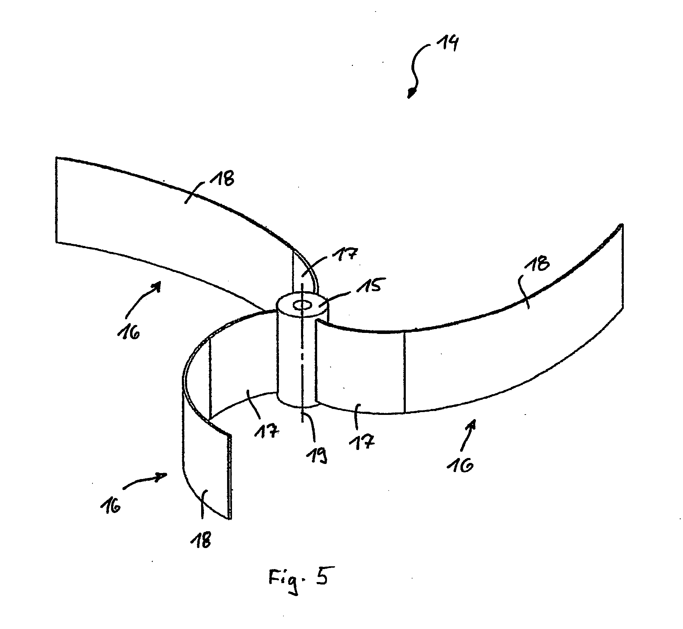

Fig. 5 zeigt eine zweite Ausführungsform 14 eines erfindungsgemäßen Rührers, der wiederum eine kreisrunde Mittelnabe 15 und drei Rührblätter 16 aufweist.

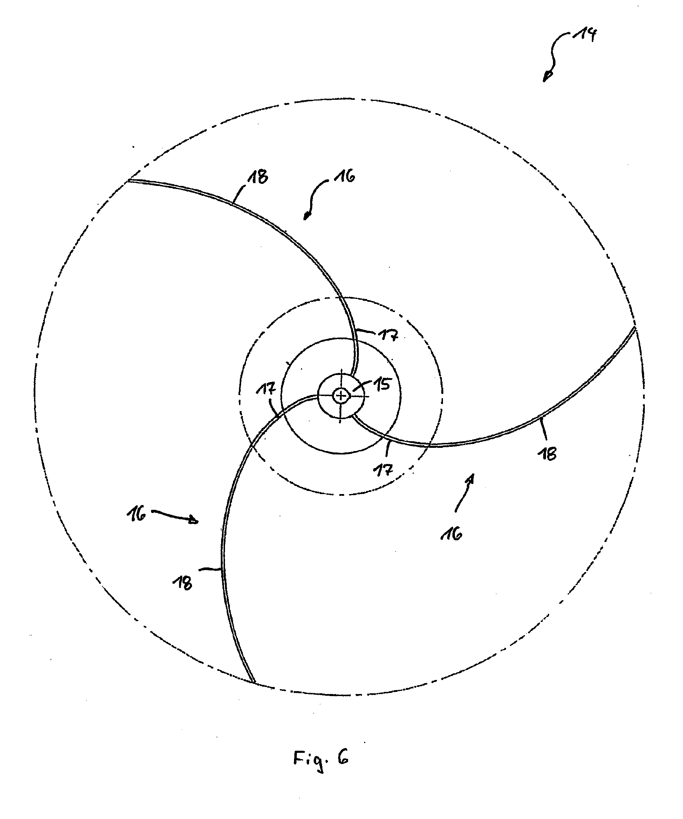

Wie in Fig. 6 ersichtlich, unterscheidet sich der Rührer 14 vom Rührer 01 dadurch, dass auch die ersten Abschnitte 17 der Rührblätter 16, an die sich jeweils wiederum ein zweiter Abschnitt 18 anschließt, bogenförmig geformt sind, so dass die Rührblätter 16 insgesamt von ihrem freien Ende bis zum Anschlusspunkt an der Mittelnabe 15 einen evolventenförmigen Bogen bilden.

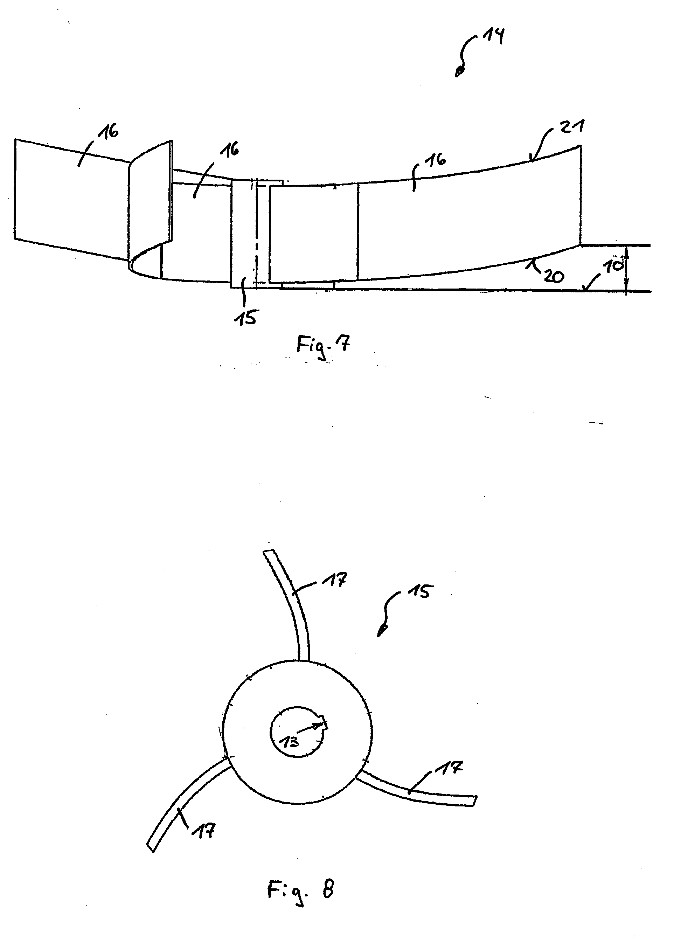

Fig. 7 zeigt den Rührer 14 in seitlicher Ansicht. Auch hier sind die Unterkanten 20 der Rührblätter 16 wiederum bogenförmig nach oben gekrümmt und die Oberkanten 21 verlaufen parallel zu den Unterkanten 20.

Fig. 8 zeigt die Mittelnabe 15 mit den bogenförmig gestalteten ersten Abschnitten 17.

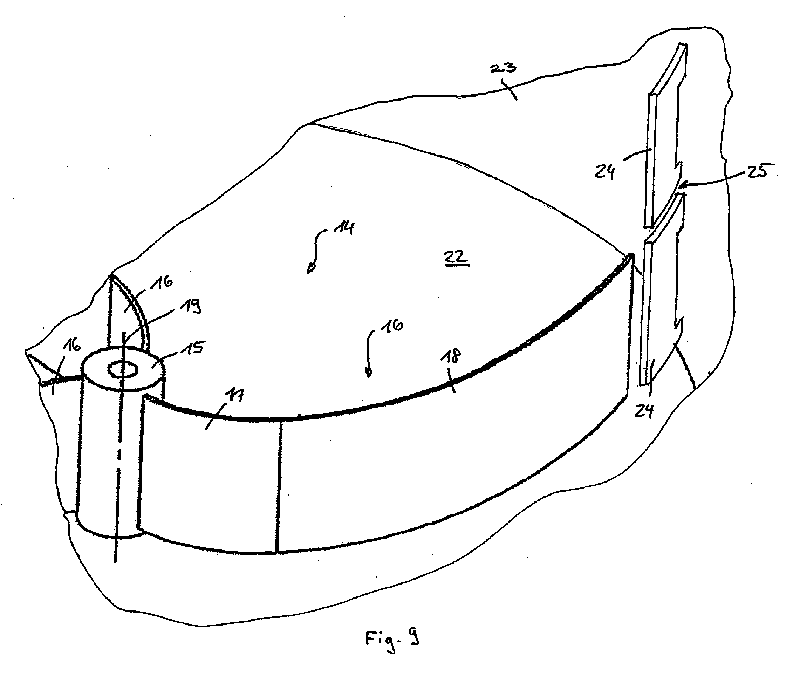

Fig. 9 zeigt den Rührer 14 mit dem evolventenförmigen Rührblatt 16 bei Anordnung über dem Boden 22 eines Maischgefäßes 23. Am Innenumfang des Maischgefäßes 23 sind jeweils mehrere Strömungsbrecher 24 vertikal übereinander angeordnet, wobei die übereinander angeordneten Strömungsbrecher 24 jeweils einen Vertikalabstand 25 aufweisen.

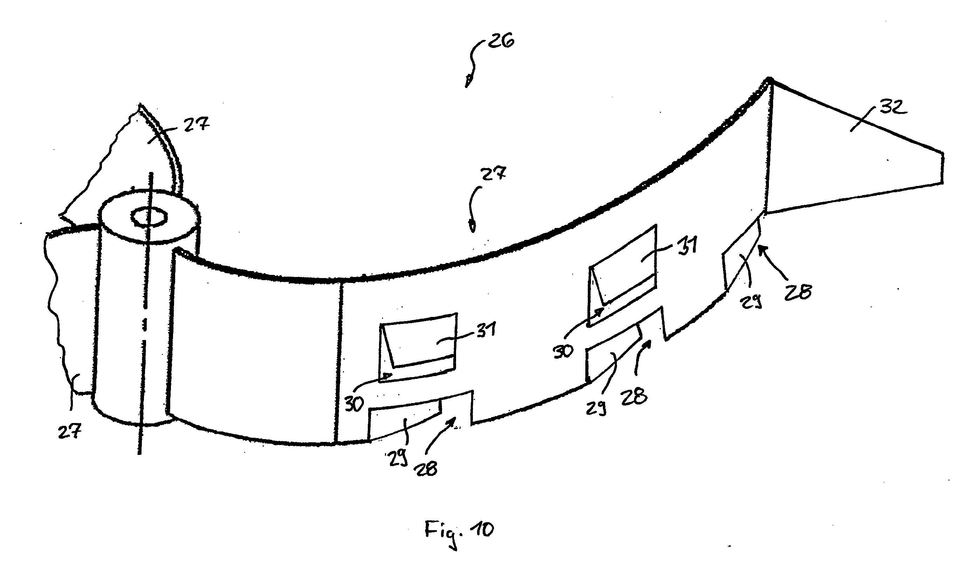

Fig. 10 zeigt eine dritte Ausführungsform 26 eines erfindungsgemäßen Rührers. Die Rührblätter 27 des Rührers 26, die in Fig. 10 nur teilweise dargestellt sind, weisen Aussparungen 28 an der Unterkante des Rührblatts 27 auf. Hinter jeder Aussparung 28 ist dabei ein Strömungsleitelement 29 vorgesehen, um die durch die Aussparungen 28 durchströmende Maische umzulenken.

Außerdem weisen die Rührblätter 27 jeweils zwei Ausnehmungen 30 auf, die ebenfalls von der Maische durchströmt werden. Hinter den Ausnehmungen 30 ist wiederum jeweils ein Strömungsleitelement 31 zur Umlenkung der Maischeströmung vorgesehen.

Die Rührblätter 27 sind darüber hinaus an ihrem feien Ende jeweils mit einem ergänzenden Strömungsleitelement 32 ausgestattet.

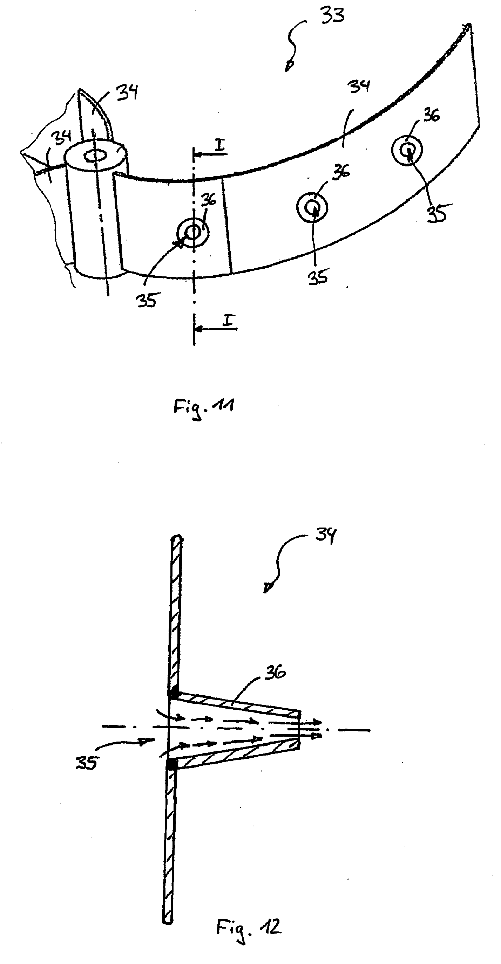

Fig. 11 und 12 zeigen eine vierte Ausführungsform eines Rührers mit kreisrunden Ausnehmungen 35 in den drei Rührblättern 34. Hinter den Ausnehmungen 35 sind jeweils düsenförmige Strömungsleitelemente 36 angeordnet, deren kreisförmiger Strömungsquerschnitt sich in Strömungsrichtung verengt, um die Strömungsgeschwindigkeit zu erhöhen und dadurch Verwirbelungen am Austritt aus dem düsenförmigen Strömungsleitelement 36 zu verursachen.

### Bezugszeichenliste

| | | | |
|---|---|---|---|
| 01 | Rührer | 33 | Rührer |
| 02 | Rührblatt | 34 | Rührblatt |
| 03 | Mittelnabe | 35 | Ausnehmung |
| 04 | Erster Abschnitt (Rührblatt) | 36 | Strömungsleitelement |
| 05 | Zweiter Abschnitt (Rührblatt) | | |
| 06 | Rotationsrichtung (Rührer) | | |
| 07 | Vorderseite (Rührblatt) | | |
| 08 | Umfangskreis (erster Abschnitt) | | |
| 09 | Umfangskreis (Rührer) | | |
| 10 | Bezugsniveau | | |
| 11 | Unterkante (Rührblatt) | | |
| 12 | Oberkante (Rührblatt) | | |
| 13 | Nut (Mittelnabe) | | |
| 14 | Rührer | | |
| 15 | Mittelnabe | | |
| 16 | Rührblatt | | |
| 17 | Erster Abschnitt (Rührblatt) | | |
| 18 | Zweiter Abschnitt (Rührblatt) | | |
| 19 | Mittelachse | | |
| 20 | Unterkante (Rührblatt) | | |
| 21 | Oberkante (Rührblatt) | | |
| 22 | Boden (Maischgefäß) | | |
| 23 | Maischgefäß | | |
| 24 | Strömungsbrecher | | |
| 25 | Vertikalabstand | | |
| 26 | Rührer | | |
| 27 | Rührblatt | | |
| 28 | Aussparung | | |
| 29 | Strömungsleitelement | | |
| 30 | Ausnehmung | | |
| 31 | Strömungsleitelement | | |
| 32 | Strömungsleitelement | | |

## Patentansprüche

1. Maischgefäß (23) für die Bierherstellung mit zumindest einem Rührer (01, 14, 26, 33), der rotatorisch antreibbar über dem Boden (10, 22) des Maischgefäßes (23) angeordnet ist, wobei der Rührer (01, 14, 26, 33) zumindest ein sich von der Mittelachse (19) radial nach außen erstreckendes Rührblatt (02, 16, 27, 34) aufweist, und wobei das Rührblatt (02, 16, 27, 34) bei Antrieb des Rührers (01, 14, 26, 33) durch die im Maischgefäß (23) enthaltene Maische bewegt werden kann, um die Maische zu durchmischen, wobei sich die Längsachse des Rührblatts (02, 16, 27, 34) zumindest abschnittsweise bogenförmig radial nach außen erstreckt,
**dadurch gekennzeichnet,**
**dass** das Rührblatt (16) zwei Abschnitte (17, 18) aufweist, die separat biegeverformt und anschließend an der Schnittstelle miteinander verbunden wurden, wobei der erste an der Mittelnabe (15) angebrachte Abschnitt (17) sich bogenförmig radial nach außen erstreckt, und wobei sich der zweite Abschnitt (18) bogenförmig radial nach außen erstreckt, und wobei am freien Ende des zweiten Abschnitts (18) des Rührblatts (27) ein Strömungsleitelement (32) angeordnet ist, mit dem die Maischeströmung, insbesondere nach oben, umgelenkt werden kann, und wobei das Rührblatt (27, 34) im zweiten Abschnitt (18) zumindest eine Aussparung (28) und/oder zumindest eine Ausnehmung (30, 35) aufweist, in denen die Maische das Rührblatt (27, 34) durchströmen kann.

2. Maischgefäß nach Anspruch 1,
**dadurch gekennzeichnet,**
**dass** die in Rotationsrichtung (06) gerichtete Vorderseite (07) des Rührblatts (02, 16, 27, 34) zumindest abschnittsweise konvex gekrümmt ist.

3. Maischgefäß nach Anspruch 2,
**dadurch gekennzeichnet,**
**dass** die in Rotationsrichtung (06) gerichtete Vorderseite (07) des Rührblatts (02, 16, 27, 34) zumindest abschnittsweise evolventenförmig gekrümmt ist.

4. Maischgefäß nach einem der Ansprüche 1 bis 3,
**dadurch gekennzeichnet,**
**dass** am Rührer (01, 14, 26, 33)mehrere, insbesondere drei, Rührblätter (02, 16, 27, 34) vorgesehen sind.

5. Maischgefäß nach einem der Ansprüche 1 bis 4,
**dadurch gekennzeichnet,**
**dass** zur Drehmomentübertragung auf den Rührer (01, 14, 26, 33) eine Mittelnabe (03, 15) vorgesehen ist, die auf einer Antriebswelle in Eingriff gebracht werden kann, wobei die Rührblätter (02, 16, 27, 34) am Außenumfang der Mittelnabe (03, 15) befestigt, insbesondere angeflanscht oder angeschweißt, sind, wobei die Mittelnabe (03, 15) einen kreisförmigen Außenumfang oder einen prismatischen, insbesondere dreieckigen, Außenumfang aufweist.

6. Maischgefäß nach einem der Ansprüche 1 bis 5,
**dadurch gekennzeichnet,**
**dass** das Rührblatt (02) zwei Abschnitte (04, 05) aufweist, wobei der erste an der Mittelnabe (03) angebrachte Abschnitt (04) sich geradlinig radial nach außen erstreckt, und wobei sich der zweite Abschnitt (05) bogenförmig radial nach außen erstreckt.

7. Maischgefäß nach einem der Ansprüche 1 bis 6,
**dadurch gekennzeichnet,**
**dass** die Unterkante (11, 20) des Rührblatts (02, 16, 27) der Kontur des Bodens (10, 22) des Maischgefäßes (23) folgend nach oben verläuft.

8. Maischgefäß nach Anspruch 7,
**dadurch gekennzeichnet,**
**dass** sich die Unterkante (11, 20) des Rührblatts (02, 16, 27) in Richtung des freien Endes des Rührblatts (02, 16, 27) bogenförmig nach oben erstreckt, wobei die Oberkante (12, 21) des Rührblatts (02, 16, 27) parallel zur Unterkante (11, 20) des Rührblatts (02, 16, 27) verläuft.

9. Maischgefäß nach Anspruch 8,
**dadurch gekennzeichnet,**
**dass** an der Unterkante des Rührblatts (27) zumindest eine Aussparung (28) vorgesehen ist, wobei hinter der Aussparung (28) ein Strömungsleitelement (29) angeordnet ist, mit dem die Maischeströmung, insbesondere nach radial außen, umgelenkt werden kann.

10. Maischgefäß nach Anspruch 8 oder 9,
**dadurch gekennzeichnet,**
**dass** zwischen der Unterkante und der Oberkante des Rührblatts (27) zumindest eine Ausnehmung (30, 35) vorgesehen ist, wobei hinter der Ausnehmung (30, 35) ein Strömungsleitelement (31, 36) angeordnet ist, mit dem die Maischeströmung, insbesondere nach unten, umgelenkt werden kann.

11. Maischgefäß nach Anspruch 10,
**dadurch gekennzeichnet,**
**dass** das hinter der Ausnehmung (35) angeordnete Strömungsleitelement (36) einen geschlossenen, insbesondere kreisförmigen, Strömungsquerschnitt bildet, wobei sich der Strömungsquerschnitt in Strömungsrichtung verengt.

12. Maischgefäß nach einem der Ansprüche 1 bis 11,
**dadurch gekennzeichnet,**
**dass** am Innenumfang des Maischgefäßes (23) zumindest ein feststehender Strömungsbrecher (24) angeordnet ist.

13. Maischgefäß nach Anspruch 12,
**dadurch gekennzeichnet,**
**dass** zumindest zwei Strömungsbrecher (24) in Vertikalrichtung übereinander angeordnet sind, wobei zwischen den beiden Strömungsbrechern (24) ein zumindest geringfügiger Vertikalabstand (25) vorhanden ist.

14. Maischgefäß nach Anspruch 12 oder 13,
**dadurch gekennzeichnet,**
**dass** der Strömungsbrecher (24) beheizbar ist.

15. Rührer (01, 14, 26) für ein Maischgefäß (23) nach einem der Ansprüche 1 bis 22, der rotatorisch antreibbar über dem Boden (10, 22) des Maischgefäßes (23) angeordnet ist, wobei der Rührer (01, 14, 26) zumindest ein sich von der Mittelachse (19) radial nach außen erstreckendes Rührblatt (02, 16, 27) aufweist, und wobei das Rührblatt (02, 16, 27) bei Antrieb des Rührers (01, 14, 26) durch die im Maischgefäß (23) enthaltene Maische bewegt werden kann, um die Maische zu durchmischen, wobei sich die Längsachse des Rührblatts (02, 16, 27) zumindest abschnittsweise bogenförmig radial nach außen erstreckt
**dadurch gekennzeichnet,**
**dass** das Rührblatt (16) zwei Abschnitte (17, 18) aufweist, die separat biegeverformt und anschließend an der Schnittstelle miteinander verbunden wurden, wobei der erste an der Mittelnabe (15) angebrachte Abschnitt (17) sich bogenförmig radial nach außen erstreckt, und wobei sich der zweite Abschnitt (18) bogenförmig radial nach außen erstreckt, und wobei am freien Ende des zweiten Abschnitts (18) des Rührblatts (27) ein Strömungsleitelement (32) angeordnet ist, mit dem die Maischeströmung, insbesondere nach oben, umgelenkt werden kann, und wobei das Rührblatt (27, 34) im zweiten Abschnitt (18) zumindest eine Aussparung (28) und/oder zumindest eine Ausnehmung (30, 35) aufweist, in denen die Maische das Rührblatt (27, 34) durchströmen kann.

## Claims

1. A mash tun (23) for producing beer, comprising at least one stirrer (01, 14, 26, 33), which is drivable so as to rotate and is arranged above the bottom (10, 22) of the mash tun (23), the stirrer (01, 14, 26, 33) having at least one stirring blade (02, 16, 27, 34) extending radially outwards from the centre axis (19), and the stirring blade (02, 16, 27, 34) being movable through the mash contained in the mash tun (23) when the stirrer (01, 14, 26, 33) is being driven so as to thoroughly mix the mash, the longitudinal axis of the stirring blade (02, 16, 27, 34) extending radially outwards in a curved shape at least in sections,
**characterised in that**
the stirring blade (16) has two portions (17, 18) that have been separately deformed by bending and have then been connected to each other at the joint, the first portion (17) mounted on the centre hub (15) extending radially outwards in a curved shape, and the second portion (18) extending radially outwards in a curved shape, and a flow guiding element (32) being arranged at the free end of the second portion (18) of the stirring blade (27), the mash flow being deflectable by means of said flow guiding element (32), in particular upwards, and the stirring blade (27, 34) having, in the second portion (18), at least one cut-out (28) and/or at least one recess (30, 35) in which the mash can flow through the stirring blade (27, 34).

2. The mash tun according to claim 1,
**characterised in that**
the front side (07) of the stirring blade (02, 16, 27, 34) oriented in the direction of rotation (06) is curved convexly at least in sections.

3. The mash tun according to claim 2,
**characterised in that**
the front side (07) of the stirring blade (02, 16, 27, 34) oriented in the direction of rotation (06) is curved in an involute shape at least in sections.

4. The mash tun according to any of the claims 1 to 3,
**characterised in that**
several, in particular three, stirring blades (02, 16, 27, 34) are provided on the stirrer (01, 14, 26, 33).

5. The mash tun according to any of the claims 1 to 4,
**characterised in that**
for torque transmission to the stirrer (01, 14, 26, 33), a centre hub (03, 15) is provided which can be engaged onto a drive shaft, the stirring blades (02, 16, 27, 34) being attached, in particular flanged or welded, to the outer circumference of the centre hub (03, 15), the centre hub (03, 15) having a circular outer circumference or a prismatic, in particular triangular, outer circumference.

6. The mash tun according to any of the claims 1 to 5,
**characterised in that**
the stirring blade (02) has two portions (04, 05), the first portion (04) mounted on the centre hub (03) extending radially outwards in a straight line, and the second portion (05) extending radially outwards in a curved shape.

7. The mash tun according to any of the claims 1 to 6,
**characterised in that**
the lower edge (11, 20) of the stirring blade (02, 16, 27) extends upwards, following the contour of the bottom (10, 22) of the mash tun (23).

8. The mash tun according to claim 7,
**characterised in that**
the lower edge (11, 20) of the stirring blade (02, 16, 27) extends upwards in a curved shape in the direction of the free end of the stirring blade (02, 16, 27), the upper edge (12, 21) of the stirring blade (02, 16, 27) running parallel to the lower edge (11, 20) of the stirring blade (02, 16, 27).

9. The mash tun according to claim 8,
**characterised in that**
at least one cut-out (28) is provided at the lower edge of the stirring blade (27), a flow guiding element (29) being arranged behind the cut-out (28), by means of which the mash flow can be deflected in particular radially outwards.

10. The mash tun according to claim 8 or 9,
**characterised in that**
at least one recess (30, 35) is provided between the lower edge and the upper edge of the stirring blade (27), a flow guiding element (31, 36) being arranged behind the recess (30, 35), by means of which the mash flow can be deflected in particular downwards.

11. The mash tun according to claim 10,
**characterised in that**
the flow guiding element (36) arranged behind the recess (35) forms a closed, in particular circular, flow cross-section, the flow cross-section narrowing in the flow direction.

12. The mash tun according to any of the claims 1 to 11,
**characterised in that**
at least one stationary baffle (24) is arranged at the inner circumference of the mash tun (23).

13. The mash tun according to claim 12,
**characterised in that**
at least two baffles (24) are arranged one above the other in the vertical direction, an at least slight vertical distance being present between the two baffles (24).

14. The mash tun according to claim 12 or 13,
**characterised in that**
the baffle (24) can be heated.

15. A stirrer (01, 14, 26) for a mash tun (23) according to any of the claims 1 to 14 which can be driven so as to rotate and is arranged above the bottom (10, 22) of the mash tun (23), the stirrer (01, 14, 26) having at least one stirring blade (02, 16, 27) extending radially outwards from the centre axis (19), and the stirring blade (02, 16, 27) being movable through the mash contained in the mash tun (23) when the stirrer (01, 14, 26) is being driven so as to thoroughly mix the mash, the longitudinal axis of the stirring blade (02, 16, 27) extending radially outwards in a curved shape at least in sections,
**characterised in that**
the stirring blade (16) has two portions (17, 18) which have been separately deformed by bending and have then been connected to each other at the joint, the first portion (17) mounted on the centre hub (15) extending radially outwards in a curved shape, and the second portion (18) extending radially outwards in a curved shape, and a flow guiding element (32) being arranged at the free end of the second portion (18) of the stirring blade (27), the mash flow being deflectable by means of said flow guiding element (32), in particular upwards, and the stirring blade (27, 34) having, in the second portion (18), at least one cut-out (28) and/or at least one recess (30, 35) in which the mash can flow through the stirring blade (27, 34).

## Revendications

1. Cuve matière (23) pour la fabrication de bière, comprenant au moins un agitateur (01, 14, 26, 33) qui est disposé au-dessus du fond (10, 22) de la cuve matière (23) de manière entraînable en rotation, l'agitateur (01, 14, 26, 33) ayant au moins une pale d'agitation (02, 16, 27, 34) s'étendant radialement à partir de l'axe central (19) vers l'extérieur, et la pale d'agitation (02, 16, 27, 34) pouvant être déplacée au travers du moût contenu dans la cuve matière (23) lors de l'entraînement de l'agitateur (01, 14, 26, 33) afin de bien mélanger le moût, l'axe longitudinal de la pale d'agitation (02, 16, 27, 34) s'étendant radialement vers l'extérieur sous forme courbée au moins en sections,
**caractérisée en ce que**
la pale d'agitation (16) a deux parties (17, 18) qui ont été déformées séparément par flexion et puis ont été connectées l'une à l'autre à la jonction, la première partie (17) montée sur le moyeu (15) s'étendant radialement vers l'extérieur sous forme courbée, et la deuxième partie (18) s'étendant radialement vers l'extérieur sous forme courbée, et un élément de guidage d'écoulement (32) étant disposé à l'extrémité libre de la deuxième partie (18) de la pale d'agitation (27), par lequel l'écoulement de moût peut être dévié, en particulier vers le haut, et la pale d'agitation (27, 34) ayant au moins une encoche (28) et/ou au moins un évidement (30, 35) dans la deuxième partie (18), dans lesquels le moût peut couler à travers la pale d'agitation (27, 34).

2. Cuve matière selon la revendication 1,
**caractérisée en ce que**
la face avant (07) de la pale d'agitation (02, 16, 27, 34) orientée dans la direction de rotation (06) a une courbure convexe au moins en sections.

3. Cuve matière selon la revendication 2,
**caractérisée en ce que**
la face avant (07) de la pale d'agitation (02, 16, 27, 34) orientée dans la direction de rotation (06) a une courbure en forme de développante au moins en sections.

4. Cuve matière selon l'une quelconque des revendications 1 à 3,
**caractérisée en ce que**
plusieurs, en particulier trois, pales d'agitation (02, 16, 27, 34) sont prévues sur l'agitateur (01, 14, 26, 33).

5. Cuve matière selon l'une quelconque des revendications 1 à 4,
**caractérisée en ce que**
pour la transmission de couple à l'agitateur (01, 14, 26, 33), un moyeu central (03, 15) est prévu qui peut être mis en prise sur un arbre d'entraînement, les pales d'agitation (02, 16, 27, 34) étant fixées, en particulier bridées ou soudées, à la circonférence extérieure du moyeu central (03, 15), le moyeu central (03, 15) ayant une circonférence extérieure circulaire ou une circonférence extérieure prismatique, en particulier triangulaire.

6. Cuve matière selon l'une quelconque des revendications 1 à 5,
**caractérisée en ce que**
la pale d'agitation (02) a deux parties (04, 05), la première partie (04) montée sur le moyeu central (03) s'étendant radialement vers l'extérieur en ligne droite, et la deuxième partie (05) s'étendant radialement vers l'extérieur sous forme courbée.

7. Cuve matière selon l'une quelconque des revendications 1 à 6,
**caractérisée en ce que**
le bord inférieur (11, 20) de la pale d'agitation (02, 16, 27) s'étend vers le haut en suivant le contour du fond (10, 22) de la cuve matière (23).

8. Cuve matière selon la revendication 7,
**caractérisée en ce que**
le bord inférieur (11, 20) de la pale d'agitation (02, 16, 27) s'étend sous forme courbée vers le haut dans la direction de l'extrémité libre de la pale d'agitation (02, 16, 27), le bord supérieur (12, 21) de la pale d'agitation (02, 16, 27) étant parallèle au bord inférieur (11, 20) de la pale d'agitation (02, 16, 27).

9. Cuve matière selon la revendication 8,
**caractérisée en ce qu'**
au moins une encoche (28) est prévue au bord inférieur de la pale d'agitation (27), un élément de guidage d'écoulement (29) étant disposé derrière l'encoche (28), par lequel l'écoulement de moût peut être dévié, en particulier radialement vers l'extérieur.

10. Cuve matière selon les revendications 8 ou 9,
**caractérisée en ce qu'**
au moins un évidement (30, 35) est prévu entre le bord inférieur et le bord supérieur de la pale d'agitation (27), un élément de guidage d'écoulement (31, 36) étant disposé derrière l'évidement (30, 35), par lequel l'écoulement de moût peut être dévié, en particulier vers le bas.

11. Cuve matière selon la revendication 10,
**caractérisée en ce que**
l'élément de guidage d'écoulement (36) disposé derrière l'évidement (35) forme une coupe transversale d'écoulement fermée, en particulier circulaire, la coupe transversale d'écoulement se rétrécissant dans la direction d'écoulement.

12. Cuve matière selon l'une quelconque des revendications 1 à 11,
**caractérisée en ce qu'**
au moins une contre-pale (24) fixe est disposée sur la circonférence intérieure de la cuve matière (23).

13. Cuve matière selon la revendication 12,
**caractérisée en ce qu'**
au moins deux contre-pales (24) sont disposées l'une au-dessus de l'autre dans le sens vertical, une distance verticale (25) au moins faible existant entre les deux contre-pales (24).

14. Cuve matière selon les revendications 12 ou 13,
**caractérisée en ce que**
la contre-pale (24) peut être chauffée.

15. Agitateur (01, 14, 26) pour une cuve matière (23) selon l'une quelconque des revendications 1 à 14 qui est disposé au-dessus du fond (10, 22) de la cuve matière (23) de manière entraînable en rotation, l'agitateur (01, 14, 26) ayant au moins une pale d'agitation (02, 16, 27) s'étendant radialement à partir de l'axe central (19) vers l'extérieur, et la pale d'agitation (02, 16, 27) pouvant être déplacée au travers du moût contenu dans la cuve matière (23) lors de l'entraînement de l'agitateur (01, 14, 26) afin de bien mélanger le moût, l'axe longitudinal de la pale d'agitation (02, 16, 27) s'étendant radialement vers l'extérieur sous forme courbée au moins en sections,
**caractérisé en ce que**
la pale d'agitation (16) a deux parties (17, 18) qui ont été déformées séparément par flexion et puis ont été connectées l'une à l'autre à la jonction, la première partie (17) montée sur le moyeu (15) s'étendant radialement vers l'extérieur sous forme courbée, et la deuxième partie (18) s'étendant radialement vers l'extérieur sous forme courbée, et un élément de guidage d'écoulement (32) étant disposé à l'extrémité libre de la deuxième partie (18) de la pale d'agitation (27), par lequel l'écoulement de moût peut être dévié, en particulier vers le haut, et la pale d'agitation (27, 34) ayant au moins une encoche (28) et/ou au moins un évidement (30, 35) dans la deuxième partie (18), dans lesquels le moût peut couler à travers la pale d'agitation (27, 34).
